# EUROPÄISCHE PATENTANMELDUNG

(11) **EP 2 953 005 A1**
(43) Veröffentlichungstag der Anmeldung: **09.12.2015**
(21) Anmeldenummer: 14171023.6
(22) Anmeldetag: 03.06.2014
(51) Int. Cl.: G06F 3/01, G06F 3/03, G06F 3/0488

(54) **Anwenderschnittstelle und Verfahren zum Aufrufen eines Editiermodus eines Homescreens**

(71) Anmelder: Volkswagen Aktiengesellschaft, 38440 Wolfsburg (DE)
(72) Erfinder: Wild, Holger, 10179 Berlin (DE); Czelnik, Mark Peter, 38440 Wolfsburg (DE)

(57) **Zusammenfassung**

Es werden eine Anwenderschnittstelle und ein Verfahren zum Aufrufen eines Editiermodus für die Konfiguration eines Homescreens einer grafischen Anwenderschnittstelle vorgeschlagen. Das Verfahren umfasst die Schritte: Erkennen einer "Finger-zueinander", im Folgenden "Pinch" genannt, -Geste oder einer "Finger-auseinander", im Folgenden "Spread" genannt, Geste in einem Eingabebereich der Anwenderschnittstelle, und im Ansprechen darauf Aufrufen des Editiermodus für den Homescreen.

## Beschreibung

### Stand der Technik

Die vorliegende Erfindung betrifft eine Anwenderschnittstelle, ein Fortbewegungsmittel sowie ein Verfahren zum Aufrufen eines Editiermodus für die Konfiguration eines Homescreens einer grafischen Anwenderschnittstelle. Insbesondere betrifft die vorliegende Erfindung eine komfortabel und zuverlässig auch während der Bedienung eines Fortbewegungsmittels ausführbare Geste zum Aufrufen des Editiermodus.

Grafische Anwenderschnittstellen erfreuen sich nicht lediglich bei mobilen elektrischen Anwenderendgeräten zunehmender Beliebtheit. Auch in Fortbewegungsmitteln (z. B. PKW, Transporter, LKW etc.) werden in zunehmendem Maße grafische Anwenderschnittstellen verwendet, um die zunehmende Funktionsvielfalt der Fortbewegungsmittel komfortabel zu bedienen und ansprechend zu präsentieren. Für die Anpassung von grafischen Anwenderschnittstellen werden üblicherweise sogenannte Konfigurationsmenüs oder Schaltflächen dargestellt, über welche ein sogenannter Editiermodus für eine jeweilige Ansicht gestartet werden kann. Während der mobilen Bedienung einer grafischen Anwenderschnittstelle kann es dem Anwender jedoch Schwierigkeiten bereiten, eine entsprechende Schaltfläche optisch aufzufinden und anschließend haptisch zu bedienen.

WO 2010/134718 A2 offenbart ein mobiles elektronisches Anwenderendgerät und ein Verfahren zum Editieren unterschiedlicher Ansichten eines sogenannten "Home Screens" bei welchem im Ansprechen auf eine Langdruck(englisch "Long Press")-Geste können Elemente aus einem ersten Bereich per sogenannter Drag-Geste in einen zweiten Bereich gezogen und dort abgelegt (englisch "Drop") werden. Auf diese Weise können individuelle Homescreens für das mobile Anwenderendgerät erstellt werden.

Ausgehend von dem vorgenannten Stand der Technik ist es eine Aufgabe der vorliegenden Erfindung, eine schnelle und sichere Möglichkeit zum Aufrufen eines Editiermodus' für die Konfiguration einer grafischen Anwenderschnittstelle bereitzustellen.

### Offenbarung der Erfindung

Die vorstehend genannte Aufgabe wird erfindungsgemäß durch ein Verfahren mit den Merkmalen gemäß Anspruch 1 sowie durch eine Anwenderschnittstelle mit den Merkmalen gemäß Anspruch 4 gelöst. Das Verfahren dient dem Aufrufen eines Editiermodus für die Konfiguration eines (insbesondere mehrere Kacheln umfassenden) Homescreens einer grafischen Anwenderschnittstelle. Unter einem "Home Screen" wird im Rahmen der vorliegenden Erfindung eine Start-Ansicht einer grafischen Anwenderschnittstelle verstanden, ausgehend von welcher ein Anwender unterschiedliche, thematisch nicht notwendigerweise miteinander in Beziehung stehende Funktionen starten kann. Als "Editiermodus" wird im Rahmen der vorliegenden Erfindung eine solche Ansicht des Homescreens verstanden, in welcher nicht die auf dem Homescreen dargestellten Funktionen selbst gestartet werden können, sondern zur Organisation der Darstellung beziehungsweise Konfiguration dienliche Bedienschritte (Sekundärfunktionen) vorgenommen werden können. Erfindungsgemäß wird hierzu zunächst eine "Finger-Zueinander"-Geste oder eine "Finger-Auseinander"-Geste erkannt. Im Englischen werden die vorgenannten Gesten auch als "Pinch"- beziehungsweise "Spread"-Geste bezeichnet. Der Einfachheit halber werden nachfolgend die englischen Begriffe verwendet, welche sich im Bereich der Entwicklung grafischer Anwenderoberflächen durchgesetzt haben. Durch die Ausführung der Pinchbeziehungsweise Spread-Gesten in einem Eingabebereich der Anwenderschnittstelle können die Gesten automatisch erfasst und verarbeitet werden. Im Ansprechen auf eine erfolgreiche Erkennung einer Pinch- beziehungsweise Spread-Geste wird erfindungsgemäß der Editiermodus für den Homescreen aufgerufen. Hierzu kann die Anwenderschnittstelle im Moment der Gestenerkennung einen jeweiligen Homescreen darstellen, dessen Editiermodus im Ansprechen auf die Gestenerkennung aufgerufen wird. Anstatt eine Schaltfläche für den Aufruf des Editiermodus vorzusehen, welche einen räumlich eng begrenzten Oberflächenbereich der Anwenderschnittstelle einnimmt und daher motorisch anspruchsvoller durch ein Eingabemittel (z. B. eine Hand, ein "Stylus" etc.) des Anwenders zu bedienen ist, ein Eingabebereich zur Gestenerkennung vorgesehen sein, der mittels alternativer Gesten für den Aufruf einer Primärfunktion vorgesehen ist und lediglich beim Ausführen der erfindungsgemäßen Gesten den Aufruf des Editiermodus als Sekundärfunktion bewirkt. Auf diese Weise kann eine mobil verwendete grafische Anwenderschnittstelle schneller, einfacher und intuitiver an die Wünsche des jeweiligen Anwenders angepasst werden. Insbesondere Vibrationen und motorische Einschränkungen während des Betriebs eines Fortbewegungsmittels haben erfindungsgemäß einen geringeren Einfluss auf die Schwierigkeiten des Anwenders, den Editiermodus zu starten. Auf diese Weise erhöht sich für die Anwendungsfälle innerhalb eines Fortbewegungsmittels zudem die Verkehrssicherheit während der Bedienung der grafischen Anwenderschnittstelle.

Die Unteransprüche zeigen bevorzugte Weiterbildungen der Erfindung.

Nach erfolgter Anpassung des Homescreens im Rahmen des Editiermodus kann eine zweite Geste (Pinch/Spread-Geste) erkennt werden und im Ansprechen darauf der Editiermodus für den Homescreen verlassen werden. Erfindungsgemäße Varianten für den Aufruf beziehungsweise das Beenden des Editiermodus sind:
- Starten des Editiermodus durch eine Pinch-Geste und Verlassen des Editiermodus durch eine weitere Pinch-Geste.
- Starten des Editiermodus durch eine Pinch-Geste und Verlassen des Editiermodus durch eine Spread-Geste.
- Starten des Editiermodus durch eine Spread-Geste und Verlassen des Editiermodus durch eine weitere Spread-Geste.
- Starten des Editiermodus durch eine Spread-Geste und Verlassen des Editiermodus durch eine Pinch-Geste.

Die Verwendung einer Zwei-Finger-Geste für den Aufruf beziehungsweise das Beenden des Editiermodus ermöglicht eine klare logische Abgrenzung üblicher Gesten für den Aufruf von Primärfunktionen gegenüber einem erfindungsgemäßen Aufruf einer Sekundärfunktion einer grafischen Anwenderschnittstelle. Insbesondere können andere bekannte Gesten für den Aufruf von Funktionen beziehungsweise Sekundärfunktionen definiert werden, welche sich auf einzelne Inhalte (z. B. einzelne Kacheln des Homescreens) beziehen. Solche weiteren Funktionen können beispielsweise das Verändern einer Position einer jeweiligen Kachel sein. Eine solche Funktion könnte daher auch als Tertiärfunktion bezeichnet werden. Der Eingabebereich, innerhalb dessen die Anwenderschnittstelle die vorstehend diskutierten Gesten erfasst, kann beispielsweise als berührungsempfindliche Oberfläche einer Anzeigeeinheit ausgestaltet sein. Mit anderen Worten wird eine transparente Sensorschicht auf einen Bildschirm zur Erkennung einer Zwei-Finger-Geste in Form einer Pinch/Spread-Geste verwendet, wie sie sich im Bereich tragbarer mobiler Endgeräte mittlerweile durchgesetzt hat. Alternativ oder zusätzlich kann der Eingabebereich der Anwenderschnittstelle durch einen Raumbereich zur Erfassung frei im Raum ausgeführter Gesten bereitgestellt werden, welche im Folgenden 3D-Gesten genannt werden. Solche 3D-Gesten werden beispielsweise über optische Sensoren und/oder kapazitive Sensoren realisiert. Selbstverständlich bedeutet die Bezeichnung "optischer Sensor" in diesem Zusammenhang nicht notwendigerweise die Verwendung von Licht im für den Menschen sichtbaren Bereich. Je nach Natur des Eingabebereiches können die erfindungsgemäß vorgeschlagenen Gesten in weitgehend identischer Weise für den Aufruf des Editiermodus verwendet werden, sodass eine redundante Definition für ein und dieselbe grafische Anwenderschnittstelle möglich ist. Dies ermöglicht eine konsistente Bedienlogik der erfindungsgemäßen grafischen Anwenderschnittstelle und gestaltet die Bedienung sicher und komfortabel.

Gemäß einem zweiten Aspekt der vorliegenden Erfindung wird eine Anwenderschnittstelle vorgeschlagen, welche sich beispielsweise für die Verwendung in einem tragbaren elektronischen Anwenderendgerät und/oder einem Fortbewegungsmittel eignet. Die Anwenderschnittstelle umfasst eine Erfassungseinheit zum Erfassen einer Geste eines Anwenders. Weiter ist eine Anzeigeeinheit vorgesehen, über welche dem Anwender ein Homescreen in einem Anwendungsmodus sowie in einem Editiermodus dargestellt werden kann. Letzterer dient der Konfiguration des Homescreens. Die Anzeigeeinheit kann beispielsweise als Bildschirm ausgestaltet sein. Schließlich umfasst die Anwenderschnittstelle eine Auswerteeinheit, welche beispielsweise einen programmierbaren Prozessor (z. B. ein Mikrocontroller, ein Nanocontroller) umfassen kann. Dabei ist die Anzeigeeinheit zur Anzeige eines Homescreens eingerichtet, welcher beispielsweise mehrere Kacheln umfassen kann, welche - wie oben beschrieben - unterschiedlichen, thematisch nicht notwendigerweise zusammenhängenden Funktionen zugeordnet sein können. Die Auswerteeinheit ist eingerichtet, mittels der Signale der Erfassungseinheit (z. B. eine berührungsempfindliche Oberfläche, ein optischer Sensor o.ä.) eine Finger-Zueinander- beziehungsweise eine Finger-Auseinander-Geste erkennen kann. Diese wie oben beschrieben auch als Pinch/Spread-Geste bezeichneten Zwei-Finger-Gesten werden innerhalb der Auswerteeinheit beispielsweise mit abgespeicherten Klassen verglichen und bei einem erfolgreichen Vergleichsergebnis dazu verwendet, erfindungsgemäß einen Editiermodus für einen Homescreen aufzurufen. Mit anderen Worten ist die erfindungsgemäße Anwenderschnittstelle eingerichtet, ein Verfahren auszuführen, wie es in Verbindung mit dem erstgenannten Erfindungsaspekt im Detail beschrieben worden ist. Entsprechend ergeben sich die Merkmale, Merkmalskombinationen und die sich aus diesen ergebenden Vorteile entsprechend dem erfindungsgemäßen Verfahren.

Auch das Verlassen des Editiermodus der erfindungsgemäßen Anwenderschnittstelle kann im Ansprechen auf das Erkennen einer Pinch-Geste beziehungsweise Spread-Geste erfolgen. Somit ergibt sich eine konsistente Bedienlogik zum Aufruf und zum Verlassen des Editiermodus. Zudem kann die Fläche der grafischen Anwenderschnittstelle für die Darstellung anderweitiger Funktionen und Schaltflächen verwendet werden.

Auch die Erfassungseinheit der erfindungsgemäßen Anwenderschnittstelle kann eine optische und/oder kapazitive Sensoranordnung umfassen, mittels welcher die vorgenannten Gesten entweder als Kontaktgesten oder 3D-Gesten erfasst werden können. Selbstverständlich sind andere Sensoren, mittels welcher die erfindungsgemäß verwendeten Gesten erfasst werden können, ebenfalls verwendbar.

Die Anzeigeeinheit kann als zentrale Anzeigeeinheit und/oder als Kombiinstrument in einem Armaturenbrett des Fortbewegungsmittels vorgesehen sein. Alternativ oder zusätzlich kann auch die Wiedergabeeinheit eines sogenannten Headup-Displays als Anzeigeeinheit der vorliegenden Erfindung verwendet werden. Im letzteren Fall bietet sich insbesondere eine 3D-Gestenerkennung an, um das Sichtfeld des Fahrers nicht durch Bediengesten einzuschränken.

Gemäß einem weiteren Aspekt der vorliegenden Erfindung wird ein Anwenderendgerät vorgeschlagen, welches beispielsweise ein tragbares elektronisches Anwenderendgerät nach Art eines Drahtlos-Kommunikationsgerätes (Smartphone, Tablet, Netbook, Ultrabook) ausgestaltet sein kann. Auch dieses umfasst eine wie vorstehende beschriebene erfindungsgemäße Anwenderschnittstelle. Gemäß einem weiteren Aspekt der vorliegenden Erfindung wird ein Computerprogrammprodukt (z. B. ein Datenspeicher) vorgeschlagen, auf welchem Instruktionen gespeichert sind, die einen programmierbaren Prozessor in die Lage versetzen, die Schritte eines Verfahren gemäß dem erstgenannten Erfindungsaspekt durchzuführen. Das Computerprogrammprodukt kann als CD, DVD, Blu-Ray-Disc, Flash-Speicher, Festplatte, RAM/ROM, Cache etc. ausgestaltet sein.

Gemäß einem weiteren Aspekt der vorliegenden Erfindung wird eine Signalfolge repräsentierend Instruktionen vorgeschlagen, welche einen programmierbaren Prozessor (z. B. einer Auswerteeinheit) in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
Figur 1a eine schematische Ansicht auf Komponenten eines Ausführungsbeispiels einer erfindungsgemäßen Anwenderschnittstelle innerhalb eines Ausführungsbeispiels eines erfindungsgemäß ausgestalteten Fortbewegungsmittels;
Figur 1b eine schematische Ansicht auf Komponenten eines Ausführungsbeispiels einer erfindungsgemäßen Anwenderschnittstelle innerhalb eines Ausführungsbeispiels eines erfindungsgemäß ausgestalteten mobilen elektronischen Anwenderendgerätes;
Figur 2 eine Bildschirmansicht, welche ein Ausführungsbeispiel eines Homescreens darstellt;
Figur 3 eine Prinzipskizze zum Aufruf eines Editiermodus des in Figur 2 dargestellten Homescreens;
Figur 4 bis 7 Bildschirmansichten zur Veranschaulichung einer Animation beim Aufrufen eines Editiermodus für den Homescreen;
Figur 8 eine Prinzipskizze veranschaulichend einen Bedienschritt zum Beenden/Verlassen des Editiermodus für den Homescreen; und
Figur 9 ein Flussdiagramm veranschaulichend Schritte eines Ausführungsbeispiels eines erfindungsgemäßen Verfahrens.

### Ausführungsform(en) der Erfindung

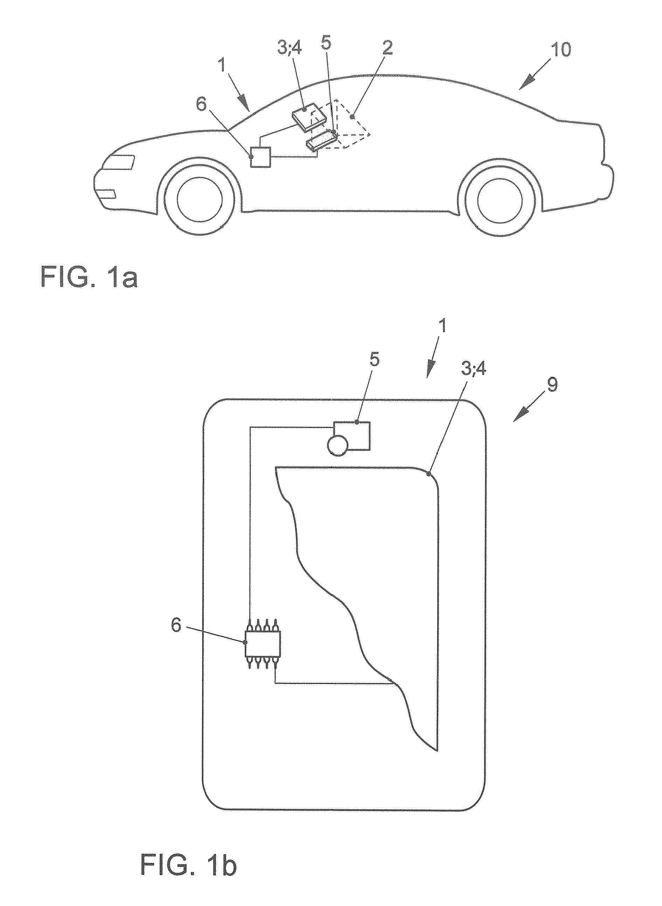

Figur 1a zeigt einen PKW 10 als erfindungsgemäß ausgestaltetes Fortbewegungsmittel, welches über eine grafische Anwenderschnittstelle 1 gemäß einem Ausführungsbeispiel der vorliegenden Erfindung verfügt. Ein zentrales Informationsdisplay (CID) 4 als

Anzeigeeinheit ist mit einer berührungsempfindlichen Oberfläche 3 als ein Ausführungsbeispiel einer Erfassungseinheit versehen. Mittels der berührungsempfindlichen Oberfläche 3 kann eine informationstechnisch angeschlossene Auswerteeinheit in Form eines elektrischen Steuergerätes 6 2D-Gesten nach Art einer Pinch/Spread-Geste erfassen und auswerten. Hierbei kann ein Vergleich mit innerhalb eines (nicht dargestellten) Datenspeichers abgespeicherten Referenzen erfolgen. Eine Infrarot-LED-Leiste 5 ist als zweites Ausführungsbeispiel einer erfindungsgemäß verwendbaren Erfassungseinheit ebenfalls informationstechnisch mit dem elektronischen Steuergerät 6 verbunden und spannt einen Eingabebereich 2 vor dem CID auf. Innerhalb des Eingabebereiches kann der Anwender 3D-Gesten in Form einer Pinchbeziehungsweise einer Spread-Geste ausführen, um einen auf dem CID 4 dargestellten Homescreen anzupassen.

Figur 1b zeigt ein Tablet 9 als Ausführungsbeispiel eines erfindungsgemäßen Anwenderendgerätes, welches ein Ausführungsbeispiel einer erfindungsgemäßen Anwenderschnittstelle umfasst. Das Tablet 9 umfasst einen Bildschirm 4 mit einer berührungsempfindlichen Oberfläche 3 als Erfassungseinheit, welche beide mit einem programmierbaren Prozessor 6 als Auswerteeinheit informationstechnisch verbunden sind. Zusätzlich ist eine optische Kamera 5 als alternatives Ausführungsbeispiel einer erfindungsgemäß verwendbaren Erfassungseinheit informationstechnisch mit dem programmierbaren Prozessor 6 verbunden. Sowohl über die berührungsempfindliche Oberfläche 3 als auch über die optische Kamera 5 können Pinch-/Spread-Gesten des Anwenders erfasst und zum Aufrufen eines Editiermodus eines Homescreens verwendet werden.

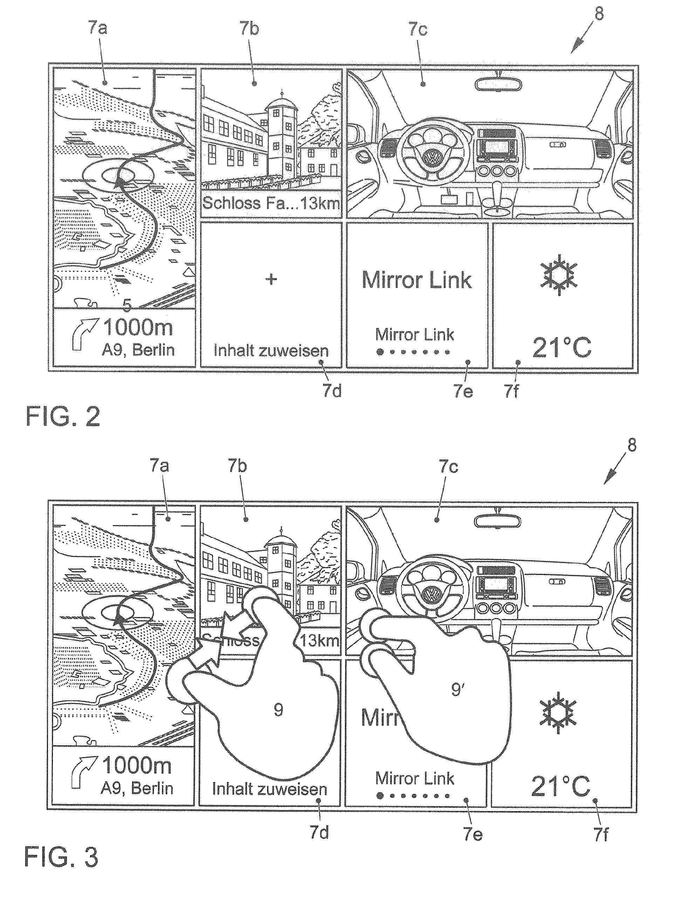

Figur 2 zeigt eine Bildschirmdarstellung eines Homescreens 8, auf welcher eine erste Kachel 7a, eine Kartendarstellung einer Navigationsfunktion, eine zweite Kachel 7b Informationen zu einem sehenswerten Gebäude in der aktuellen Umgebung, eine dritte Kachel 7c Informationen zu aktuellen Einstellungen einer Ambientebeleuchtung, eines vierte Kachel 7d eine Aufforderung zur Zuweisung eines Inhaltes, eine fünfte Kachel 7e die Möglichkeit zur redundanten Darstellung eines auf einem zusätzlichen Gerät dargestellten Bildschirminhaltes und eine sechse Kachel 7f eine Information zur aktuellen Außentemperatur darstellen.

Figur 3 zeigt ein Beispiel einer erfindungsgemäß verwendbaren Zwei-Finger-Geste in Form einer Pinch-Geste, bei welcher zwei entfernt voneinander positionierte Finger (Hand 9) zusammengeführt werden (Hand 9'). Diese Geste kann unter Kontakt mit einer berührungsempfindlichen Oberfläche, hinter welcher der Homescreen 8 dargestellt wird, oder als 3D-Geste frei im Raum ausgeführt werden. Eine erfindungsgemäß ebenfalls zum Aufrufen eines Editiermodus für die Konfiguration eines Homescreens 8 verwendbare Spread-Geste wird in umgekehrter Reihenfolge (zunächst die Stellung entsprechend der Hand 9', anschließend die Stellung der Finger der Hand 9) ausgeführt.

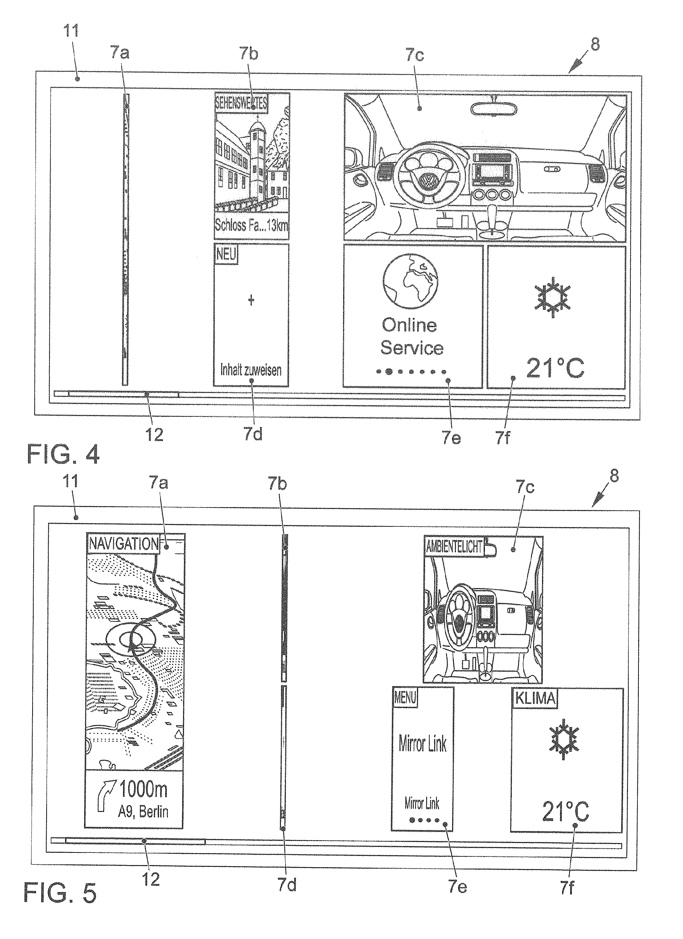

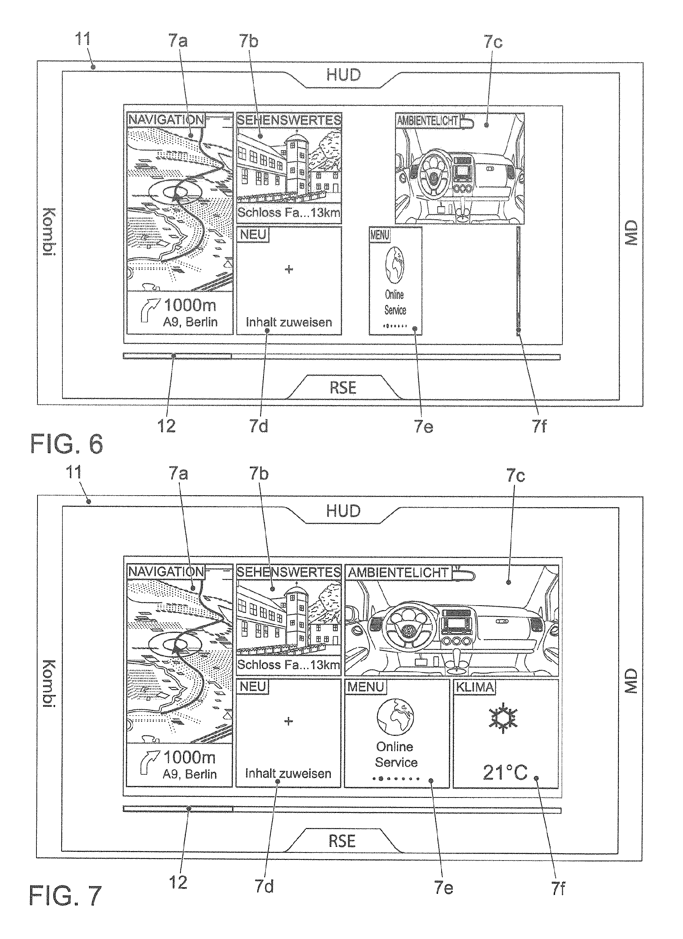

Im Ansprechen auf die in Verbindung mit Figur 3 diskutierte Geste ruft die erfindungsgemäße Anwenderschnittstelle den Editiermodus entsprechend der Sequenz der Figuren 4 bis 7 auf. Hierbei werden die dargestellten Kacheln 7a, 7b, 7c, 7d, 7e, 7f des Homescreens 8 von links nach rechts zeitlich gegeneinander versetzt, um ihre jeweilige vertikale Achse um 180 Grad gedreht, wobei sie flächenmäßig kontinuierlich verkleinert werden. Auf diese Weise wird Platz zur Darstellung eines Rahmens 11 geschaffen, welcher die Kacheln 7a, 7b, 7c, 7d, 7e, 7f im Editiermodus umgibt. Ein Scrollbalken 12 weist den Anwender auf die Möglichkeit hin, innerhalb des Editiermodus alternative Homescreens (nicht dargestellt) anzupassen, bevor der Editiermodus verlassen wird.

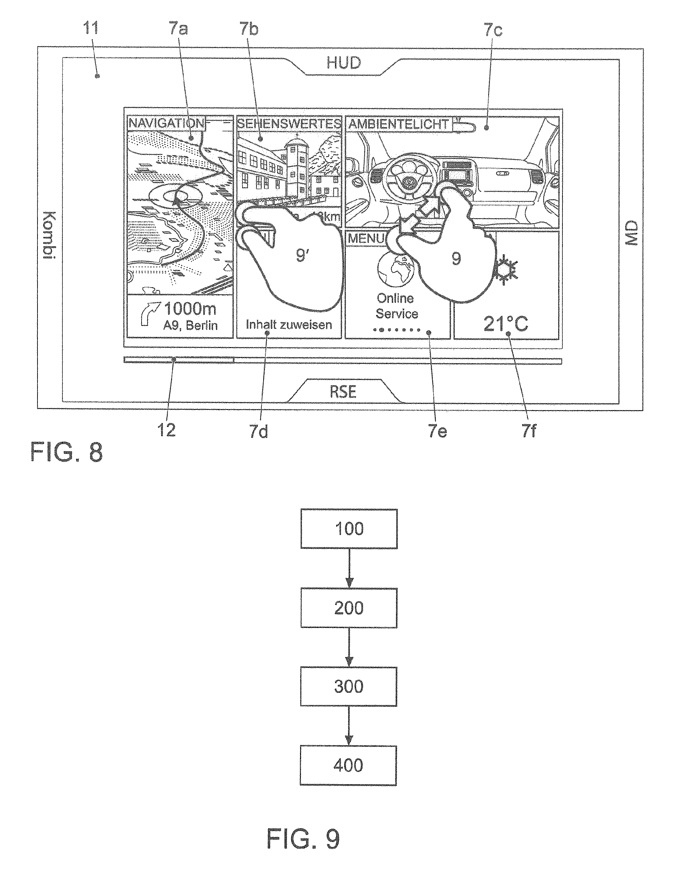

Figur 8 zeigt schematisch die Ausführung einer Spread-Geste zum Verlassen des Editiermodus, bei welcher der Daumen und der Zeigefinger aus einer geschlossenen Stellung (Hand 9') in eine gespreizte Stellung (Hand 9) geführt werden. Im Ansprechen auf diese Spread-Geste (oder alternativ eine entsprechend Figur 3 ausgeführte Pinch-Geste) wird der Editiermodus verlassen, indem beispielsweise die durch die Figuren 4 bis 7 veranschaulichte Animation in umgekehrter Reihenfolge (bezüglich der Größenänderung der Kacheln sowie bezüglich des Rahmens 11) beziehungsweise in identischer Reihenfolge (bezüglich der Rotation der Kacheln) ausgeführt wird. Im Ergebnis wird eine Figur 2 entsprechende Ansicht eines Homescreens 8 angezeigt, um Primärfunktionen der Kacheln 7a, 7b, 7c, 7d, 7e, 7f mittels alternativer Gesten starten zu können.

Figur 9 zeigt Schritte eines Ausführungsbeispiels eines erfindungsgemäßen Verfahrens. In Schritt 100 wird eine Pinch-Geste in einem Eingabebereich der Anwenderschnittstelle erkannt, im Ansprechen worauf in Schritt 200 der Editiermodus für den Homescreen aufgerufen wird. Der Anwender kann nun Anordnung und Größe der dargestellten Kacheln des angezeigten Homescreens oder nicht dargestellter Homescreens ändern. Nach Vornahme der gewünschten Änderungen führt der Anwender in Schritt 300 erneut eine Pinch-Geste in dem Eingabebereich der Anwenderschnittstelle aus, im Ansprechen worauf der Editiermodus für den Homescreen in Schritt 400 verlassen wird. Nun kann über eine Tippgeste oder andere vordefinierte Gesten auf die durch die Kacheln veranschaulichten Funktionen zugegriffen werden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Eingabebereich
- 3: berührungsempfindliche Oberfläche
- 4: Anzeigeeinheit
- 5: Infrarot-LED-Leiste
- 6: elektronisches Steuergerät / programmierbarer Prozessor
- 7a - 7f: Kacheln
- 8: Homescreen
- 9: Tablet
- 10: PKW
- 11: Rahmen
- 12: Scroll-Balken
100 - 400 Verfahrensschritte

## Patentansprüche

1. Verfahren zum Aufrufen eines Editiermodus' für die Konfiguration eines Homescreens einer graphischen Anwenderschnittstelle (1), umfassend die Schritte:
- Erkennen (100) einer "Finger-zueinander", im Folgenden "Pinch" genannt, - Geste oder einer "Finger-auseinander", im Folgenden "Spread" genannt, - Geste in einem Eingabebereich (2) der Anwenderschnittstelle (1), und im Ansprechen darauf
- Aufrufen (200) des Editiermodus für den Homescreen.

2. Verfahren nach Anspruch 1 weiter umfassend
- Erkennen (300) einer Pinch-Geste oder einer Spread-Geste in einem Eingabebereich (2) der Anwenderschnittstelle (1), und im Ansprechen darauf
- Verlassen (400) des Editiermodus für den Homescreen.

3. Verfahren nach Anspruch 1 oder 2, wobei der Eingabebereich (2) der Anwenderschnittstelle (1)
- durch eine berührungsempfindliche Oberfläche (3) einer Anzeigeeinheit (4) und/oder
- durch einen Raumbereich zur Erfassung frei im Raum ausgeführter Gesten definiert ist.

4. Anwenderschnittstelle (1) umfassend
- eine Erfassungseinheit (3, 5),
- eine Anzeigeeinheit (4), und
- eine Auswerteeinheit (6), wobei die Anzeigeeinheit (4) zur Anzeige eines Homescreens (8) eingerichtet ist, und
- die Auswerteeinheit (6) eingerichtet ist, mittels der Signale der Erfassungseinheit (3, 5) eine "Finger-zueinander", im Folgenden "Pinch" genannt, -Geste oder eine "Finger-auseinander", im Folgenden "Spread" genannt, -Geste zu erkennen, und im Ansprechen darauf die Anzeigeeinheit (4) zu veranlassen,
- einen Editiermodus für den Homescreen (8) darzustellen.

5. Anwenderschnittstelle nach Anspruch 4, wobei
- die Auswerteeinheit (6) weiter eingerichtet ist, mittels der Signale der Erfassungseinheit (3, 5) eine Pinch-Geste oder eine Spread-Geste zu erkennen, und im Ansprechen darauf die Anzeigeeinheit (4) zu veranlassen
- den Editiermodus für den Homescreen (8) zu verlassen.

6. Anwenderschnittstelle nach Anspruch 4 oder 5, wobei
die Erfassungseinheit (3, 5) eine berührungsempfindliche Oberfläche (3) aufweist und/oder einen Sensor (5) zur Erfassung frei im Raum ausgeführter Gesten.

7. Fortbewegungsmittel, insbesondere Fahrzeug, bevorzugt PKW oder Transporter oder LKW, umfassend eine Anwenderschnittstelle (1) nach einem der Ansprüche 4 bis 6.

8. Fortbewegungsmittel nach Anspruch 7, wobei die Anzeigeeinheit (4) als zentrale Anzeigeeinheit und/oder als Kombiinstrument in ein Armaturenbrett des Fortbewegungsmittels (10) eingebaut ist.

9. Anwenderendgerät, insbesondere Drahtloskommunikationsgerät (9), umfassend eine Anwenderschnittstelle (1) nach einem der Ansprüche 4 bis 6.

10. Computerprogrammprodukt umfassend Instruktionen, welche, wenn Sie auf einer Auswerteeinheit (6) einer Anwenderschnittstelle (1) nach einem der Ansprüche 4 bis 6 ausgeführt werden, die Auswerteeinheit (6) veranlassen, die Schritte eines Verfahrens nach einem der Ansprüche 1 bis 3 durchzuführen.

11. Signalfolge repräsentierend Instruktionen, welche, wenn Sie auf einer Auswerteeinheit (6) einer Anwenderschnittstelle (1) nach einem der Ansprüche 4 bis 6 ausgeführt werden, die Auswerteeinheit (6) veranlassen, die Schritte eines Verfahrens nach einem der Ansprüche 1 bis 3 durchzuführen.
